# EUROPEAN PATENT APPLICATION

(11) **EP 4 512 636 A1**
(43) Date of publication of application: **26.02.2025**
(21) Application number: 23826702.5
(22) Date of filing: 13.01.2023
(51) Int. Cl.: B60C 11/00

(54) **TYRE FOR HEAVY LOADS**

(30) Priority: 24.06.2022 JP 2022102135
(71) Applicant: BRIDGESTONE CORPORATION, Chuo-ku Tokyo 104-8340 (JP)
(72) Inventor: SATO, Akihito, Tokyo 104-8340 (JP); SUGITA, Daichi, Tokyo 104-8340 (JP)
(74) Representative: Marks & Clerk LLP
(86) International application number: PCT/JP2023/000863
(87) International publication number: WO 2023/248509

(57) **Abstract**

The provided is a heavy-duty tire 1, wherein tread rubber 7 has: a cap layer 7c; and a base layer 7b disposed on an inner circumferential side of tire than the cap layer, the cap layer comprises: a cap surface layer 7c1; and a cap intermediate layer 7c2, the cap surface layer has a larger tan δ in a tensile test under conditions of: room temperature of 24°C, amplitude of 2%, and 50Hz, than the cap intermediate layer, and difference between tan δ of the cap surface layer in a tensile test under conditions of: room temperature of 24°C, amplitude of 2%, and 50Hz, and tan δ of the cap intermediate layer in a tensile test under conditions of: room temperature of 24°C, amplitude of 2%, and 50Hz, is 0.06 or more.

## Description

### TECHNICAL FIELD

This disclosure relates to a tire for heavy loads (heavy-duty tires).

This application claims priority to Patent Application No. 2022-102135, filed in Japan on June 24, 2022, the entire contents of which are incorporated herein by reference.

### BACKGROUND

There have been heavy-duty tires with tread rubber that has a cap layer and a base layer (Patent Document 1).

### CITATION LIST

### Patent Literature

PTL 1: JP 2007-137411 A

### SUMMARY

### (Technical Problem)

Generally, heavy-duty tires are required to have two main performance characteristics: wear resistance and heat resistance (and therefore, durability). However, these performance characteristics are in a trade-off relationship, and it is not easy to achieve both.

There was room for improvement in terms of achieving both wear resistance and heat resistance in conventional heavy-duty tires.

An object of the present disclosure is to provide a heavy-duty tire that is capable of achieving both wear resistance and heat resistance at a higher level.

### (Solution to Problem)

The above object can be achieved by the following means.
[1] A heavy-duty tire, wherein
   tread rubber has:
      a cap layer; and
      a base layer disposed on an inner circumferential side of tire than the cap layer,
   the cap layer comprises:
      a cap surface layer; and
      a cap intermediate layer,
   the cap surface layer has a larger tan δ in a tensile test under conditions of: room temperature of 24°C, amplitude of 2%, and 50Hz, than the cap intermediate layer, and
   difference between tan δ of the cap surface layer in a tensile test under conditions of: room temperature of 24°C, amplitude of 2%, and 50Hz, and tan δ of the cap intermediate layer in a tensile test under conditions of: room temperature of 24°C, amplitude of 2%, and 50Hz, is 0.06 or more.

### (Advantageous Effect)

According to the present disclosure, it is possible to provide a heavy-duty tire that is capable of achieving both wear resistance and heat resistance at a higher level.

### BRIEF DESCRIPTION OF THE DRAWINGS

In the accompanying drawings:
FIG. 1 is a cross-sectional view in the tire width direction, schematically illustrating a heavy-duty tire according to one embodiment of the present disclosure;
FIG. 2 is an enlarged view illustrating a part of the heavy-duty tire in Figure 1; and
FIG. 3 provides the results of the analysis for a plurality of tire models.

### DETAILED DESCRIPTION

The heavy-duty tires according to the present disclosure can be suitably used for any type of heavy-duty tire, and are particularly suitable for use in construction and mining vehicle tires (off-the-road tires).

Hereinafter, embodiments of a heavy-duty tire according to the present disclosure will be described with reference to the drawings.

The same components and parts are designated by the same reference numerals/symbols in each drawing.

For convenience, heavy-duty tires, etc., are also referred to simply as "tires" in this document. In this document, tires are pneumatic tires.

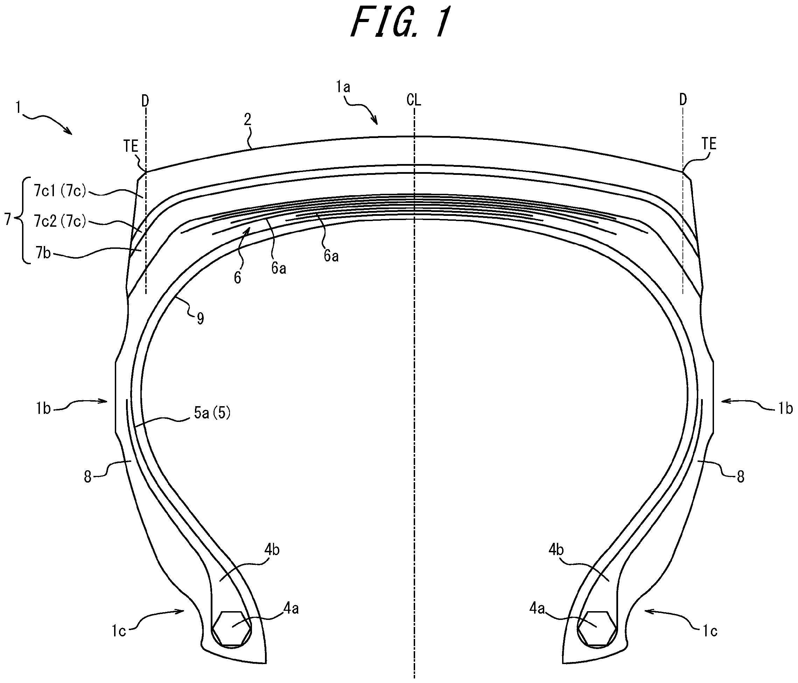

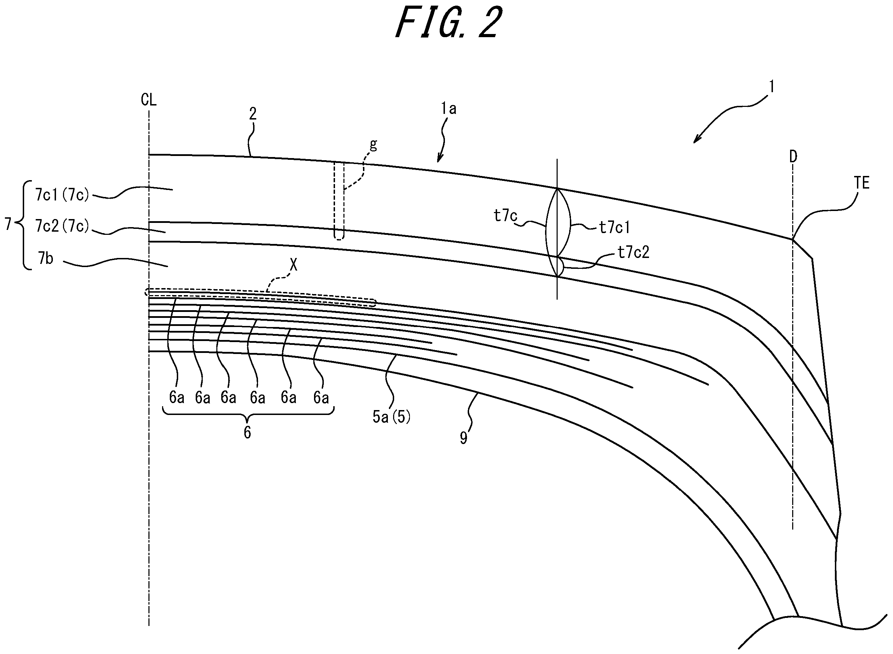

Figures 1 and 2 are drawings to explain a heavy-duty tire 1 according to one embodiment of the present disclosure. Figure 1 is a cross-sectional view in the tire width direction, schematically illustrating a heavy-duty tire according to one embodiment of the present disclosure. Figure 2 is an enlarged view illustrating a part of the heavy-duty tire in Figure 1

The heavy-duty tire 1 of the embodiment illustrated in Figures 1 and 2 are configured as a construction and mining vehicle tire (off-the-road tire). However, the heavy-duty tire 1 may be configured as any type of heavy-duty tire.

Unless otherwise specified, the position and dimensions of each element shall be measured under the reference conditions where the tire 1 is mounted on the applicable rim, filled with the prescribed internal pressure, and unloaded.

In addition, when the tire is mounted on the applicable rim, filled with the prescribed internal pressure, and loaded with the maximum load, the width in the tire width direction of the contact patch which is in contact with the road surface is referred to as the "ground contact width", and the edge in the tire width direction of the ground contact patch is referred to as the "ground contact edge".

As used herein, the term "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States. For sizes not listed in these industrial standards, the term "applicable rim" refers to a rim with a width corresponding to the bead width of the pneumatic tire. The "applicable rim" includes current sizes as well as future sizes to be listed in the aforementioned industrial standards. An example of the "size as described in the future" could be the sizes listed as "FUTURE DEVELOPMENTS" in the ETRTO 2013 edition.

As used herein, the "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted. Further, as used herein, the term "maximum load" means the load corresponding to the maximum load capacity in the tire of the applicable size described in the aforementioned industrial standards, or, for sizes not listed in the aforementioned industrial standards, the load corresponding to the maximum load capacity specified for each vehicle in which the tire is mounted.

First, the overall structure of the tire 1 will be described.

As illustrated in Figure 1, the tire 1 comprises a tread portion 1a, a pair of sidewall portions 1b extending radially inward from both ends in the tire width direction of the tread portion 1a, and a pair of bead portions 1c provided at the radially inner ends of each sidewall portion 1b. The bead portion 1c is configured so that it comes into contact with the rim on the inner side in the tire radial direction and the outer side in the tire width direction when the tire 1 is mounted on the rim.

In addition, the tire 1 comprises a pair of bead cores 4a, a pair of bead fillers 4b, a carcass 5, a belt 6, tread rubber 7, side rubber 8, and an inner liner 9.

Each bead core 4a is embedded in the corresponding bead portion 1c. The bead core 4a comprises a plurality of bead wires that are covered with rubber. The bead wire is suitably made of metal (e.g. steel). The bead wire may be, for example, of monofilament or twisted wire.

Each bead filler 4b is located on the outer side of the corresponding bead core 4a in the tire radial direction. The bead filler 4b tapers out towards the outer side in the tire radial direction. Bead filler 4b is made of rubber.

In general, bead fillers are sometimes called "stiffeners".

The carcass 5 is straddled between the pair of bead cores 4a and extends in a toroidal shape. The carcass 5 is made up of one or more (in the example in Figure 1, one) carcass ply 5a. Each carcass ply 5a contains one or more carcass cords and coating rubber that covers the carcass cords. The carcass cords may be of monofilaments or twisted wires.

The carcass 5 is preferably of radial structure, but may also be of bias structure.

The belt 6 is disposed on the outer side in the tire radial direction relative to the crown portion of the carcass 5. The belt 6 comprises one or more belt layers 6a (in the example in Figure 1, 6 layers). Each belt layer 6a contains one or more belt cords and coating rubber that covers the belt cords. The belt cords may be of monofilaments or twisted wires. The belt cord is most suitable when it is made of metal (e.g. steel), but it may also be made of organic fibers such as polyester, nylon, rayon, or aramid.

The tread rubber 7 is located on the outer side in the tire radial direction of the belt 6 in the tread portion 1a. The tread rubber 7 makes up a tread surface 2, which is the surface on the outer side in the tire radial direction of the tread portion 1a. The tread pattern is formed on the tread surface 2 by grooves and/or sipes. However, for simplicity, the illustration of the grooves and/or sipes provided on the tread surface 2 is omitted in Figure 1. In Figure 2, for reference, an example of a groove g that can be provided in the tread surface 2 is illustrated by a broken line.

Further details of the tread rubber 7 will be explained later.

The side rubber 8 is located in the sidewall portion 1b. The side rubber 8 makes up the outer surface in the tire width direction of the sidewall portion 1b. The side rubber 8 is located on the outer side in the tire width direction than the carcass 5. The side rubber 8 is located on the outer side in the tire width direction than the bead filler 4b. The side rubber 8 is molded as one piece with the tread rubber 7.

The inner liner 9 is disposed on the tire inner side of the carcass 5 and may be laminated on the tire inner side of the carcass 5, for example. The inner liner 9 is made of, for example, a butyl-based rubber having low air permeability. The butyl-based rubbers include, for example, butyl rubber and its derivative, halogenated butyl rubber. The inner liner 9 can be made not only of butyl rubber, but also of other rubber compositions, resins, or elastomers.

The following is a more detailed explanation of the tread rubber 7.

As illustrated in Figures 1 and 2, the tread rubber 7 has a cap layer 7c and a base layer 7b. The base layer 7b is disposed closer to the inner circumferential side of tire than the cap layer 7c. The cap layer 7c comprises two layers: a cap surface layer 7c1 and a cap intermediate layer 7c2, and in this embodiment, it consists of these two layers. The cap intermediate layer 7c2 is disposed closer to the inner circumferential side of tire than the cap surface layer 7c1. The surface, on the outer circumferential side of tire, of the cap surface layer 7c1 constitutes the tread surface 2.

The tread rubber 7 is made up of three layers: the cap surface layer 7c1, the cap intermediate layer 7c2, and the base layer 7b.

The cap surface layer 7c1, the cap intermediate layer 7c2, and the base layer 7b each exist throughout the entire region in the tire width direction between the tire widthwise positions D of the pair of ground contact edges TE.

The cap surface layer 7c1 has a larger tan δ in a tensile test under conditions of: room temperature of 24°C, amplitude of 2%, and 50Hz than the cap intermediate layer 7c2. The difference between the tan δ of the cap surface layer 7c1 in a tensile test under the conditions of: room temperature of 24°C, amplitude of 2%, and 50Hz, and the tan δ of the cap intermediate layer 7c2 in a tensile test under the conditions of: room temperature of 24°C, amplitude of 2%, and 50Hz, is 0.06 or more. As a result, the cap surface layer 7c1 has higher wear resistance than the cap intermediate layer 7c2, and the cap intermediate layer 7c2 has higher heat resistance than the cap surface layer 7c1.

As mentioned above, in the tire 1, the cap layer 7c of the tread rubber 7 comprises two layers: the cap surface layer 7c1 and the cap intermediate layer 7c2; the cap surface layer 7c1 has a larger tan δ in a tensile test under conditions of: room temperature of 24°C, amplitude of 2%, and 50Hz than the cap intermediate layer 7c2; and the difference between the tan δ of the cap surface layer 7c1 in a tensile test under the conditions of: room temperature of 24°C, amplitude of 2%, and 50Hz, and the tan δ of the cap intermediate layer 7c2 in a tensile test under the conditions of: room temperature of 24°C, amplitude of 2%, and 50Hz, is 0.06 or more.

Through repeated examination and analysis, the inventors of this disclosure have newly discovered that such configuration of the tire 1 makes it possible to have higher wear resistance than conventional tires while ensuring heat resistance (and thus durability).

In this way, according to this tire 1, it is possible to achieve a higher level of compatibility between wear resistance and heat resistance.

Note, that in the base layer 7b, it is suitable if the tan δ in a tensile test under the conditions of: room temperature of 24°C, amplitude of 2%, and 50Hz is lower by 0.03 or more than that of the cap intermediate layer 7c2. This makes it possible to achieve a higher level of compatibility between wear resistance and heat resistance.

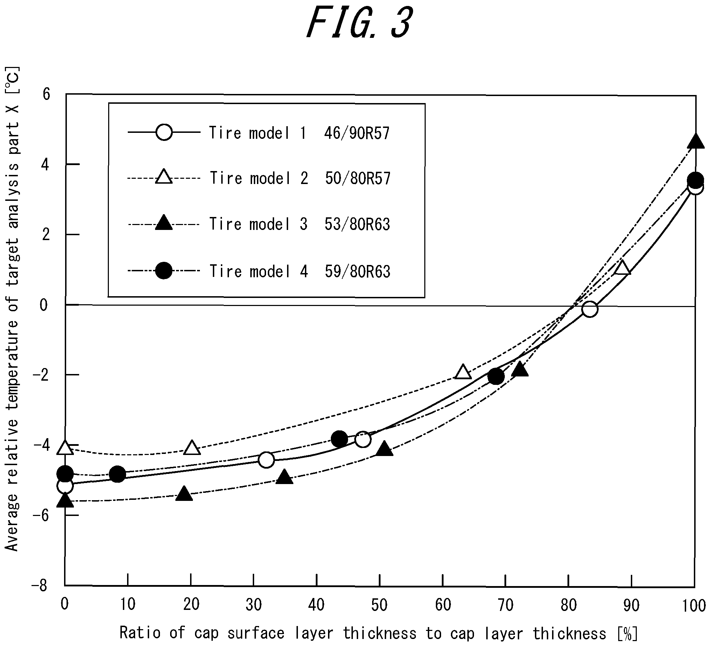

Figure 3 provides the results of the FEM analysis conducted on the four tire models 1 to 4. As provided in Figure 3, the tire models 1 to 4 each have different tire sizes. In each of the tire models 1 to 4, as provided in the examples of Figures 1 and 2, the tread rubber 7 has a cap layer 7c and a base layer 7b, and the cap layer 7c is composed of the cap surface layer 7c1 and the cap intermediate layer 7c2 (however, this does not include the case when the ratio of the thickness t7c1 of the cap surface layer 7c1 to the thickness t7c of the cap layer 7c is 0% or 100%). As the physical property value used in the FEM calculation, the cap surface layer 7c1 has tan δ of 0.25 in a tensile test under the conditions of: room temperature of 24°C, amplitude of 2%, and 50Hz, and is made of rubber with a total filler content (the total amount of carbon and silica) of 65 parts. As the physical property value used in the FEM calculation, the cap intermediate layer 7c2 has tan δ of 0.14 in a tensile test under the conditions of: room temperature of 24°C, amplitude of 2%, and 50Hz, and is made of rubber with a total filler content (the total amount of carbon and silica) of 50 parts. For the tire models 1 to 4, the ratio of a thickness t7c1 of the cap surface layer 7c1 (Figure 2) to a thickness t7c of the cap layer 7c (Figure 2) is almost constant throughout the entire region in the tire width direction between tire widthwise positions D of a pair of ground contact edges TE.

In the graph in Figure 3, the horizontal axis is the ratio (%) of the thickness of the cap surface layer 7c1 to the thickness of the cap layer 7c of each tire model. In the graph in Figure 3, the vertical axis is the relative temperature (°C) compared to a given reference temperature, that occurred in a target analysis part X (Figure 2) of each tire model when each tire model was made to perform a specified action. The target analysis part X is the part that is located approximately 3.5 mm on the outer circumferential side of tire from the outermost belt layer 6a in the belt 6 and is located near the tire equatorial plane CL in the tire width direction, as illustrated in Figure 2. The above-mentioned reference temperature is, as in the past, the temperature (°C) that occurs in the part of the target analysis part X of the tire when the above-mentioned specified operation is performed on a given tire. The given tire is such tire, for example, which comprises a cap layer consisting of only one layer; and is made of rubber in which a tan δ in a tensile test under the conditions of room temperature of 24°C, amplitude of 2%, and 50Hz is 0.19, and a total filler content (the total amount of carbon and silica) is 55 parts, as the physical properties used in the FEM calculation.

The above-mentioned reference temperature can be used as an indicator of the heat resistance of conventional tires. In addition, the relative temperature of the target analysis part X of the tire model can be used as an indicator of the heat resistance of that tire model. If the relative temperature of the target analysis part X is 0°C, the heat resistance of the tire model is equivalent to that of conventional tires, and the lower the relative temperature of the target analysis part X, the higher the heat resistance of the tire model.

As can be seen from the analysis results in Figure 3, it is possible to adjust the degree of heat resistance and wear resistance of the tire 1 by adjusting the ratio of the thickness t7c1 of the cap surface layer 7c1 to the thickness t7c of the cap layer 7c, and in turn, the ratio of the thickness t7c1 of the cap surface layer 7c1 to the thickness t7c2 of the cap intermediate layer 7c2.

In this document, the "thickness t7c of cap layer 7c", the "thickness t7c1 of cap surface layer 7c1" and the "thickness t7c2 of cap intermediate layer 7c2" shall be measured parallel to the tire radial direction, as illustrated in Figure 2.

The ratio of the thickness t7c1 of the cap surface layer 7c1 to the thickness t7c of the cap layer 7c, t7c1/t7c, and the ratio of the thickness t7c1 of the cap surface layer 7c1 to the thickness t7c2 of the cap intermediate layer 7c2, t7c1/t7c2, may be constant or may vary along the tire width direction between the tire widthwise positions D of the pair of ground contact edges TE.

For the tire 1, it is suitable that, in the cap layer 7c, the average value of the ratio of the thickness t7c1 of the cap surface layer 7c1 to the thickness t7c of the cap layer 7c in the part between the tire widthwise positions D of the pair of ground contact edges (i.e., the part from the tire widthwise position D of one ground contact edge TE to the tire widthwise position D of the other ground contact edge TE), is 85% or less, and 80% or less is even more suitable.

As can be seen from the analysis results provided in Figure 3, this makes it easier to secure the thickness t7c2 of the cap intermediate layer 7c2, and in turn, to secure at least approximately the same level of heat resistance as before. Therefore, it is possible to achieve a higher level of compatibility between wear resistance and heat resistance.

For the tire 1, it is suitable, in the cap layer 7c, that the average value of the ratio of the thickness t7c1 of the cap surface layer 7c1 to the thickness t7c of the cap layer 7c in the part between the tire widthwise positions D of the pair of ground contact edges (i.e., the part from the tire widthwise position D of one ground contact edge TE to the tire widthwise position D of the other ground contact edge TE), is 60% or more, and 70% or more is even more suitable.

This allows the thickness t7c1 of the cap surface layer 7c1 to be increased, greatly extending the period of use before the cap intermediate layer 7c2, which has low wear resistance, is exposed. Therefore, it is possible to achieve a higher level of compatibility between wear resistance and heat resistance.

Note, that it is suitable that the groove bottom (the innermost end of a groove g in the tire radial direction) of the deepest groove g among each groove g provided in the tread rubber 7 (Figure 2) is located within the cap layer 7c, and it is more suitable that the groove bottom is located within the cap intermediate layer 7c2 as illustrated in Figure 2. The same applies to sipes.

### INDUSTRIAL APPLICABILITY

The heavy-duty tires according to the present disclosure can be suitably used for any type of heavy-duty tire, and are particularly suitable for use in construction and mining vehicle tires (off-the-road tires).

### REFERENCE SIGNS LIST

- 1: Heavy-duty tire (tire)
- 1a: Tread portion
- 1b: Sidewall portion
- 1c: Bead portion
- 2: Tread surface
- 4a: Bead core
- 4b: Bead filler
- 5: Carcass
- 5a: Carcass ply
- 6: Belt
- 6a: Belt layer
- 7: Tread rubber
- 7c: Cap layer
- 7c1: Cap surface layer
- 7c2: Cap intermediate layer
- 7b: Base layer
- 8: Side rubber
- 9: Inner liner
- CL: Tire equatorial plane
- TW: Ground contact width
- TE: Ground contact edge
- D: Tire widthwise position of the ground contact edge
- X: Target Analysis part
- G: Groove

## Claims

1. A heavy-duty tire, wherein
tread rubber has:
a cap layer; and
a base layer disposed on an inner circumferential side of tire than the cap layer,
the cap layer comprises:
a cap surface layer; and
a cap intermediate layer,
the cap surface layer has a larger tan δ in a tensile test under conditions of: room temperature of 24°C, amplitude of 2%, and 50Hz, than the cap intermediate layer, and
difference between tan δ of the cap surface layer in a tensile test under conditions of: room temperature of 24°C, amplitude of 2%, and 50Hz, and tan δ of the cap intermediate layer in a tensile test under conditions of: room temperature of 24°C, amplitude of 2%, and 50Hz, is 0.06 or more.

2. The heavy-duty tire according to claim 1, wherein tan δ of the base layer in a tensile test under conditions of: room temperature of 24°C, amplitude of 2%, and 50Hz is lower by 0.03 or more than that of the cap intermediate layer.

3. The heavy-duty tire according to claim 1, wherein, in the cap layer, an average value of a ratio of a thickness of the cap surface layer to a thickness of the cap layer in a part between tire widthwise positions of a pair of ground contact edges is 85% or less.

4. The heavy-duty tire according to claim 1, wherein, in the cap layer, an average value of a ratio of a thickness of the cap surface layer to a thickness of the cap layer in a part between tire widthwise positions of a pair of ground contact edges is 60% or more.

5. The heavy-duty tire according to claim 1, wherein, in the cap layer, an average value of a ratio of a thickness of the cap surface layer to a thickness of the cap layer in a part between tire widthwise positions of a pair of ground contact edges is 60 to 85%.

6. The heavy-duty tire according to any one of claims 1 to 5, wherein the cap surface layer, the cap intermediate layer, and the base layer each exist throughout an entire region in the tire width direction between the tire widthwise positions of the pair of ground contact edges.
